Europäisches Patentamt

European Patent Office

Office européen des brevets

(11) Veröffentlichungsnummer: **0 444 551 A2**

# (12) EUROPÄISCHE PATENTANMELDUNG

(21) Anmeldenummer: 91102676.3

(22) Anmeldetag: 23.02.91

(51) Int. Cl.5: **B60H 1/00**

(30) Priorität: 01.03.90 DE 4006373

(43) Veröffentlichungstag der Anmeldung:
04.09.91 Patentblatt 91/36

(84) Benannte Vertragsstaaten:
DE ES FR GB IT

(71) Anmelder: **Adam Opel Aktiengesellschaft
Bahnhofsplatz 1 Postfach 17 10
W-6090 Rüsselsheim(DE)**

(72) Erfinder: **Köhler, Reinhard, Dipl.-Ing.
Erfurter Strasse 23
W-6086 Riedstadt 5(DE)**
Erfinder: **Jobst, Wolfgang, Ing.
Im Teich 94
W-6085 Nauheim(DE)**

(74) Vertreter: **Bergerin, Ralf, Dipl.-Ing. et al
Adam Opel Aktiengesellschaft Bahnhofplatz
1 Postfach 17 10
W-6090 Rüsselsheim(DE)**

(54) Gehäuse für ein Gebläse einer Kraftfahrzeugheizung oder Klimaanlage.

(57) Die Erfindung betrifft ein Gehäuse für ein Gebläse einer Kraftfahrzeugheizung oder Klimaanlage mit einem Gebläseaggregat (1) und einem verschiebbaren Verschlußteil zur Einstellung verschiedener Betriebszustände. Dabei ist das Gebläseaggregat (1) integraler Bestandteil des Gehäuses und die Öffnungen für Frischluft und/oder Umluft können durch das Verschlußteil entweder zugleich oder wahlweise jeweils für sich kontinuierlich verschließbar sein.

Fig. 3

EP 0 444 551 A2

Die Erfindung betrifft ein Gehäuse für ein Gebläse einer Kraftfahrzeugheizung oder Klimaanlage mit einem Gebläseaggregat und einem verschiebbaren Verschlußteil zur Einstellung verschiedener Betriebszustände.

Artgemäße Aggregate einer Kraftfahrzeugheizung oder Klimaanlage sind im Kraftfahrzeug so angeordnet, daß das Gebläseaggregat einen wesentlichen zentralen Bestandteil der Heizung oder Klimaanlage darstellt. Die Steuerung von Umluft bzw. Frischluft erfolgt dabei so, daß vor den Öffnungen von überwiegend Radialgebläsen mit ein oder zwei Ansaugöffnungen Klappen so angeordnet sind, daß jeweils in einer Stellung der Außenluft- und in der anderen Stellung der Umluftkanal geöffnet ist. Die Klappen werden von der einen in die andere Position mit Hilfe von Vakuumantrieb, Elektromotor oder Bowdenzugantrieb gesteuert.

Die Umluft- bzw. Außenluftklappen können nur in den jeweiligen Endpositionen betrieben werden, denn bei Zwischenstellungen strömt ungewollt Außenluft direkt über den teilweise offenen Umluftkanal in den Fahrgastinnenraum. Es entsteht ein nicht beabsichtigter "Ram-Air"-Effekt. Dadurch, daß die Klappen nur zwei Positionen einnehmen können, ist keine Mengenregelung der Luft bei ausgeschaltetem Gebläse möglich. Zudem ist die mechanische Betätigung der Klappen nur mit großem Aufwand realisierbar, da diese von der Umluft- auf die Außenluftstellung springen müssen.

Der vorliegenden Erfindung liegt daher die Aufgabe zugrunde, ein Gehäuse für ein Gebläse einer Kraftfahrzeugheizung oder Klimaanlage anzugeben, durch das eine Luftmengenregelung möglich ist, und das mit einfachen Bauelementen auskommt und somit kostengünstiger produziert werden kann.

Diese Aufgabe wird erfindungsgemäß dadurch gelöst, daß das Gebläseaggregat integraler Bestandteil des Gehäuses ist, und die Öffnungen für Frischluft und/oder Umluft durch das Verschlußteil entweder zugleich oder wahlweise jeweils für sich kontinuierlich verschließbar sind.

Die Erfindung hat den wesentlichen Vorteil, daß kein Kraftmoment durch Eigengewicht wie bei der Klappenbetätigung auftritt. Es ist eine Mengenregelung im Staubetrieb d.h., wenn das Gebläseaggregat abgeschaltet ist, ebenso möglich wie im Nicht-Staubetrieb. Es tritt kein "Ram-Air-Effekt" auf, da auch bei teilweise geöffneter Frischluftöffnung die Umluftöffnung immer geschlossen bleibt. Außerdem ergibt sich eine definierte Zu-Stellung (Nullposition).

Die Bedienung des Verschlußteils erfolgt über einfache mechanische Mittel wie eine Perforation oder eine Verzahnung im Verschlußteil und ein korrespondierendes verzahntes Antriebselement zum Weitertransport des Verschlußteils. Dadurch entfallen Bowdenzüge oder Klappenelemente mit Federn sowie Vakuumantrieb mit Stellmotoren.

Weitere vorteilhafte Ausgestaltungen der Erfindung ergeben sich aus den Unteransprüchen. Ausführungsbeispiele der Erfindung sind in den Figuren dargestellt und werden im folgenden näher erläutert; es zeigen:

Fig. 1 ein Gehäuse für ein Gebläse einer Kraftfahrzeugheizung oder Klimaanlage nach dem Stand der Technik,

Fig. 2 das Gebläse gemäß Figur 1 in Seitenansicht,

Fig. 3 das erfindungsgemäße Gehäuse für eine Gebläseaggregat als integraler Bestandteil mit geschlossenen Umluft- und Außenluftkanälen,

Fig. 4 das Gehäuse gemäß Figur 3 in Seitenansicht,

Fig. 5 das erfindungsgemäße Gehäuse mit geöffnetem Außenluft- und verschlossenem Umluftkanal und

Fig. 6 das erfindungsgemäße Gehäuse mit geöffnetem Umluft- und verschlossenem Außenluftkanal.

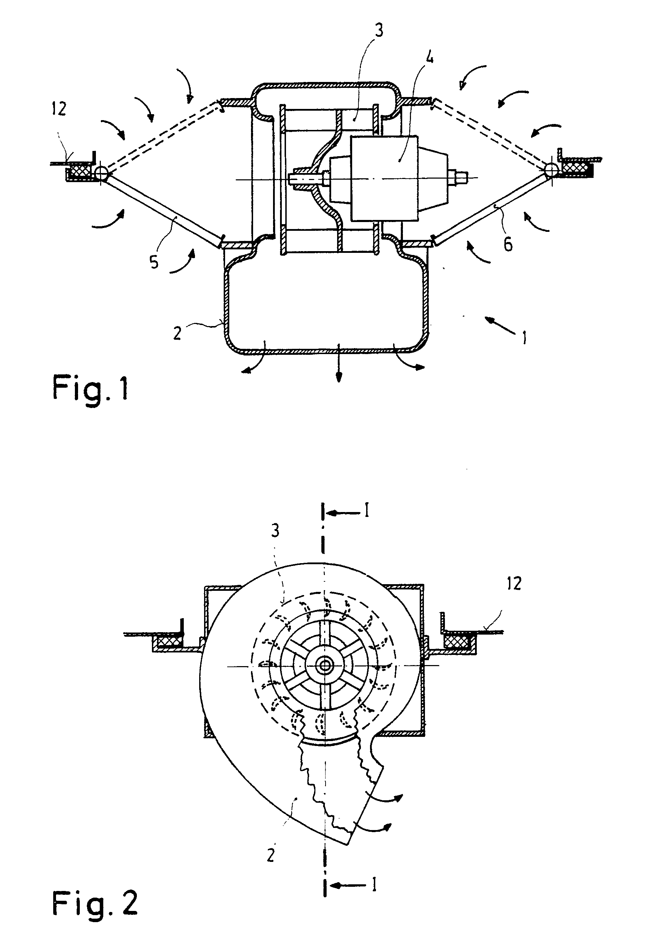

Das in Figur 1 gezeigte Gebläsegehäuse nach dem Stand der Technik besteht im wesentlichen aus einem Gebläseaggregat 1 und dem Ausströmkanal 2. Seitlich in axialer Richtung zum Rotor 3 des Gebläsemotors 4 sind zwei Klappen 5, 6 angeordnet, die synchron entweder nach oben oder nach unten bewegt werden bis zum Anschlag; einmal in der oberen Position für Umluftbetrieb oder in der unteren Position für Außenluftbetrieb. Die Figur zeigt, daß die Klappen keine Zwischenstellung einnehmen. Dies wäre nur mit erheblichem Mehraufwand unter Einschaltung zusätzlicher Bauelemente möglich. Außerdem würde dann der unerwünschte "Ram-Air"-Effekt auftreten, was bedeutet, daß kalte Außenluft über die geöffnete, in einer Mittelposition befindliche Klappe in den Fahrgastinnenraum strömen und so zu einer erheblichen Verschlechterung der Klimatisierungsverhältnisse beitragen würde.

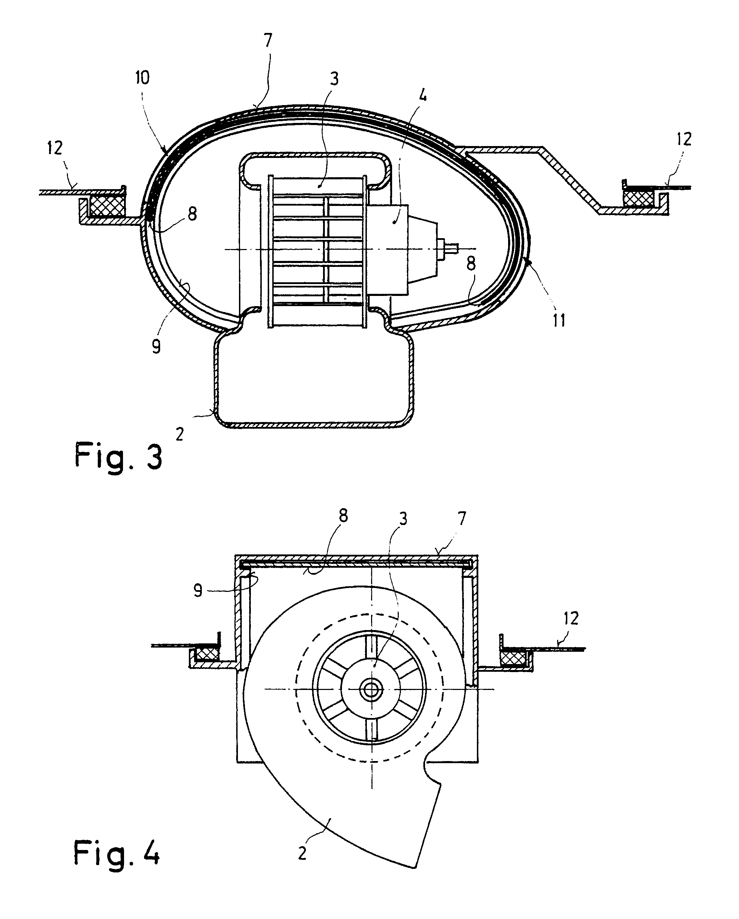

Demgegenüber zeigt das erfindungsgemäße Gehäuse der Figur 3, daß das Gebläseaggregat 1 integraler Bestandteil des Gehäuses 7 ist. Das Gehäuse 7 mit seiner ovalen oder ellipsoiden Form liegt mit seiner Gebläsewand an der Stirnwand des Fahrzeugchassis 12 an dessen Fahrzeuginnenraum an. Die ovale Form umgibt dabei das Gebläseaggregat 1 in einer integralen Form. Dabei ist die Folie 8 zwischen Führungsnuten 9 verschiebbar gelagert und wird über eine Perforation und einen nicht dargestellten Ritzelantrieb beweglich geführt. In der Darstellung gemäß Figur 3 sind Umluftkanal 11 und Außenluftkanal oder Frischluftkanal 10 verschlossen, so daß eine definierte Ausgangsposition möglich ist und diese als Nullstellung bezeichnet werden kann.

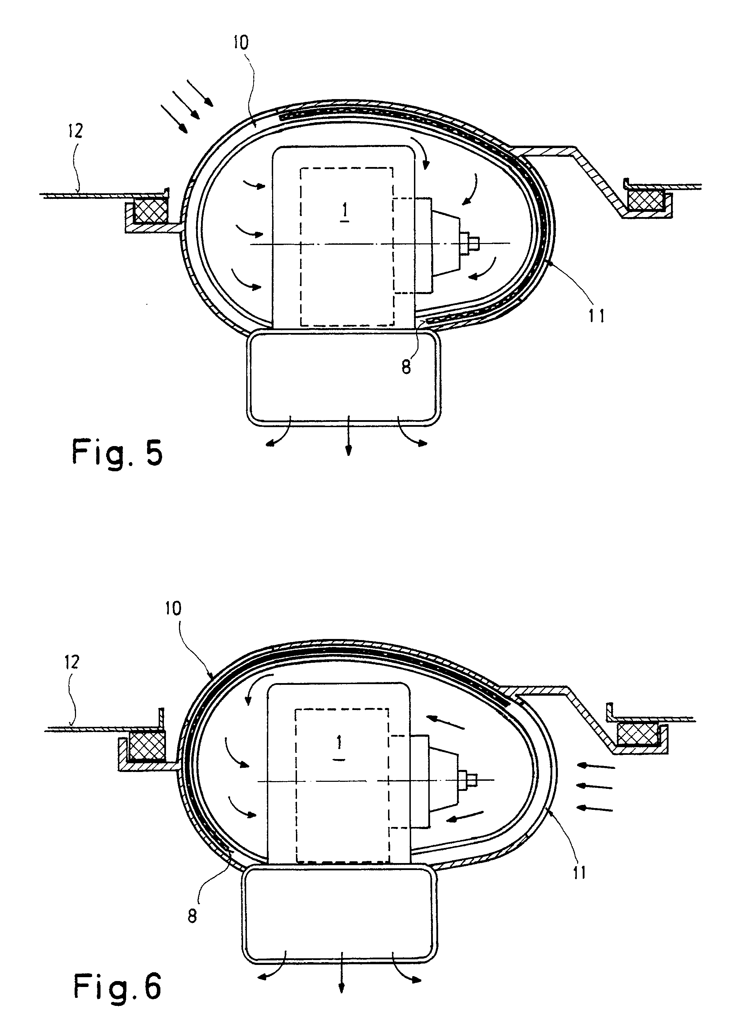

In der Figur 5 ist hingegen der Außenluftkanal 10 vollständig geöffnet. Es ist jedoch auch möglich, diesen nur zur Hälfte oder beispielsweise nur zu einem Drittel zu öffnen, so daß über diese Maßnahme bei gleichzeitig geschlossenem Umluftkanal 11 Frischluft in das Gehäuse einströmt und durch den halb geöffneten oder drittel geöffneten Außenluftkanal 10 eine Luftmengenregelung möglich ist. Dasselbe gilt für die Figur 6, wo der Umluftkanal 11 vollständig geöffnet ist. Auch hier ist eine Luftmengenregelung möglich, was beim Stand der Technik nicht gangbar ist.

Wesentlich bei den Figuren 5 und 7 ist, daß das Verschiebeelement, d. h. die Folie 8 bzw. das Kreissegment, entweder den Umluftkanal 11 und den Außenluftkanal 10 gleichzeitig verschließt, oder aber diese beiden Kanäle alternativ kontinuierlich verschließbar sind.

## Patentansprüche

1. Gehäuse für ein Gebläse einer Kraftfahrzeugheizung oder Klimaanlage mit einem Gebläseaggregat und einem verschiebbaren verschluß-teil zur Einstellung verschiedener Betriebszu-stände, **dadurch gekennzeichnet,** daß das Gebläseaggregat (1) integraler Bestandteil des Gehäuses ist und die Öffnungen für Frischluft (10) und/oder Umluft (11) durch das Verschlußteil (8) entweder zugleich oder wahlweise jeweils für sich kontinuierlich verschließbar sind.

2. Gehäuse nach Anspruch 1, **dadurch gekennzeichnet,** daß das verschiebbare verschlußteil (8) eine Folie ist.

3. Gehäuse nach Anspruch 1, **dadurch gekennzeichnet,** daß das verschiebbare verschlußteil (8) ein festes Kreissegment ist.

4. Gehäuse nach Anspruch 2, **dadurch gekennzeichnet,** daß das Gehäuse in Bewegungsrichtung der Folie (8) ovale Krümmungsradien hat.

5. Gehäuse nach Anspruch 3, **dadurch gekennzeichnet,** daß das Gehäuse in Bewegungsrichtung des Kreissegments kreisbogenförmig ausgestaltet ist.

6. Gehäuse nach einem der Ansprüche 1 bis 5, **dadurch gekennzeichnet,** daß die Folie (8) bzw. das Kreissegment in Führungsnuten (9) an den Längsrändern des Gehäuses in den zwei Richtungen führbar sind und keine Durchbrüche zur Weiterleitung der Luft aufweisen.

7. Gehäuse nach einem der vorangehenden Ansprüche, **dadurch gekennzeichnet,** daß die Folie (8) bzw. das Kreissegment im Bereich ihrer Längskanten eine Perforation oder Verzahnung aufweisen, in welche eine korrespondierende Verzahnung eines Antriebelements (Ritzel, Zahnsegment) zum Weitertransport eingreift.

Fig.1

Fig.2

Fig. 3

Fig. 4

Fig. 5

Fig.6